(19) Europäisches Patentamt
European Patent Office
Office européen des brevets

(11) Veröffentlichungsnummer: **0 225 606**
**A2**

(12) **EUROPÄISCHE PATENTANMELDUNG**

(21) Anmeldenummer: **86116835.9**

(22) Anmeldetag: **03.12.86**

(51) Int. Cl.⁴: **C 09 B 67/20**, C 09 B 11/12, C 09 B 11/02

(30) Priorität: **10.12.85 DE 3543520**

(43) Veröffentlichungstag der Anmeldung: **16.06.87 Patentblatt 87/25**

(84) Benannte Vertragsstaaten: **CH DE FR GB IT LI**

(71) Anmelder: **HOECHST AKTIENGESELLSCHAFT, Postfach 80 03 20, D-6230 Frankfurt am Main 80 (DE)**

(72) Erfinder: **Schneider, Manfred, Cuntzstrasse 1, D-6239 Eppstein/Taunus (DE)**
Erfinder: **Uhde, Christa, Richard-Wagner-Strasse 35, D-6239 Kriftel (DE)**
Erfinder: **Zimmermann, Manfred, Dr., In der Tränk 29, D-6050 Offenbach am Main (DE)**

(54) **Pastenförmige Pigmentpräparationen, Verfahren zu ihrer Herstellung und ihre Verwendung.**

(57) Die Erfindung betrifft pastenförmige Pigmentpräparationen von Pigmenten der Arylpararosanilinsulfonsäure-Reihe, die frei von aromatenhaltigen Mineralölen sind und die sich zur Herstellung von Druckfarben, insbesondere Buch- und Offsetdruckfarben eignen. Die Pigmentpräparationen sind erhältlich durch Flushen wässriger Presskuchen der Pigmente mit Hilfe der Lösung eines Flushharzes in aromatenfreiem Mineralöl und Präparieren der erhaltenen Flushpaste mit einem öl- oder fettsäuremodifizierten Alkydharz.

EP 0 225 606 A2

# Pastenförmige Pigmentpräparationen, Verfahren zu ihrer Herstellung und ihre Verwendung

Die vorliegende Erfindung betrifft Arylpararosanilinsulfonsäure-Pigmentpräparationen, die sich besonders zur Herstellung von Druckfarben, insbesondere Buch- und Offsetdruckfarben eignen.

Es ist bekannt, wäßrige Preßkuchen von Pigmenten aus der Reihe der Arylpararosanilinsulfonsäuren der allgemeinen Formel I

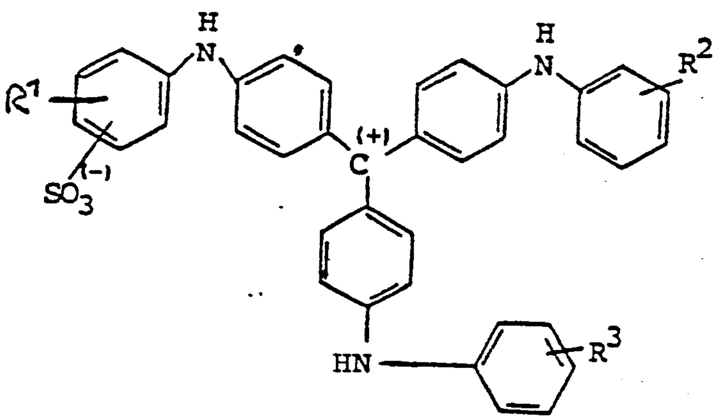

(I)

in welcher $R^1$, $R^2$ und $R^3$ unabhängig voneinander jeweils einen der Reste Wasserstoff, Halogen, wie Chlor oder Brom, $C_1$-$C_3$-Alkyl, $C_1$-$C_3$-Alkoxy oder Nitro bedeuten, einem Flushprozess zu unterwerfen, wobei das Pigment in ein Bindemittel überführt und gleichzeitig weitgehend entwässert sowie konzentriert wird. Auf diese Weise werden Flushkonzentrate erhalten, welche das Pigment in gut dispergierter Form enthalten und welche sich leicht in einen Buch- oder Offsetdruckfirnis einarbeiten lassen und dabei farbstarke Buch- bzw. Offsetdruckfarben ergeben.

Trocknet man dagegen die wäßrigen Preßkuchen, wie es bei vielen anderen Pigmenten üblich ist, so bilden sich bei den genannten Arylpararosanilinsulfonsäurepigmenten wegen ihrer ausgeprägten Polarität harte Agglomerate, die sich nicht mehr durch normale mechanische Beanspruchung beim

Anreiben auf einem Drei-Walzenstuhl zur Herstellung der entsprechenden Druckpasten zerlegen lassen. Die schlechte Dispergierbarkeit der Pigmente wirkt sich auf die Farbstärke, Homogenität, Glanz und Transparenz der Druckfarben ungünstig aus. Die getrockneten Arylpararosanilinsulfonsäurepigmente sind daher als solche für die Verwendung in Druckfarben unbrauchbar. Die geflushten Pigmente (Flushpasten) weisen diesen Nachteil bei geeigneter Wahl des Bindemittels nicht auf.

Die vorwiegend eingesetzten Bindemittel für den Flush-Prozeß von Arylpararosanilinsulfonsäurepigmenten bestehen aus einem oder mehreren Harzen (Flushharz) und hochsiedendem, aromatenhaltigem Mineralöl. Derartige Bindemittel sind in der DT-2354225-B2 (U.S. Patent Nr. 3,950,288) beschrieben.

Da die Verwendung von Mineralölen mit einem Gehalt an höher kondensierten Aromaten zunehmend gesetzlichen Auflagen oder Einschränkungen unterliegen, ist es im Interesse einer breiten Einsatzmöglichkeit von Flushpasten wünschenswert, Mineralöle oder Lösemittel zu verwenden, die frei von Aromaten sind.

Die Löslichkeit von Flushharzen in aromatenfreien Mineralölen ist geringer als in aromatenhaltigen Mineralölen. Unter Einhaltung bestimmter verfahrenstechnischer Bedingungen ist es nach Austausch der aromatenhaltigen Mineralöle in den Bindemitteln durch aromatenfreie Mineralöle dennoch möglich, einen Flush-Prozeß durchzuführen. Die erhaltenen Flushpasten weisen aber ungenügende anwendungstechnische Eigenschaften auf.

Die analog zu den herkömmlichen Flush-Prozessen jedoch unter Verwendung von Flushharz und aromatenfreiem Mineralöl hergestellten Flushpasten von Arylpararosanilinsulfonsäurepigmenten mit einem in der Praxis üblichen Pigmentgehalt

haben nicht die Konsistenz und Zügigkeit, wie sie für einen störungsfreien Druck im Buch- und Offsetdruck benötigt werden.

Ein weiterer Nachteil der Flushpasten mit aromatenfreiem Mineralöl besteht in der ausgeprägten Thixotropie. Schon nach wenigen Stunden Lagerung bei 50 - 60°C werden die vorher pumpbaren Pasten hart und brockig, so daß deren Verarbeitung erheblich erschwert und deshalb nicht mehr praktikabel ist. Es besteht somit ein Bedarf nach Präparationen der Arylpararosanilinsulfonsäurepigmente ohne Gehalt an aromatenhaltigem Mineralöl oder aromatenhaltigem Lösemittel, wobei die Präparationen für den Einsatz in Druckfarben, insbesondere in Druckfarben für Buch- und Offsetdruckverfahren, geeignet sein sollen.

Gegenstand der Erfindung sind pastenförmige Pigmentpräparationen, bestehend im wesentlichen aus

a) 35 - 50 Gewichtsprozent an einem Pigment oder mehreren der allgemeinen Formel I

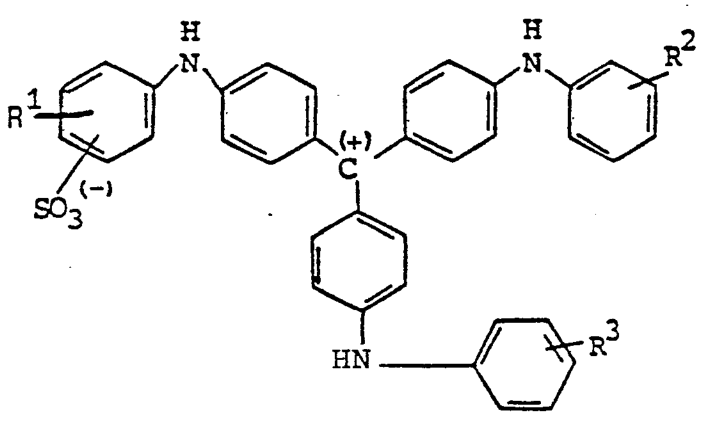

(I)

in welcher $R^1$, $R^2$ und $R^3$ unabhängig voneinander jeweils einen der Reste Wasserstoff, Halogen, wie Chlor oder Brom, $C_1$-$C_3$-Alkyl, $C_1$-$C_3$-Alkoxy oder Nitro bedeuten,

b) 2 - 15 Gewichtsprozent an einem öl- oder fettsäuremodifizierten Alkydharz,

c) einem langöligen Alkydharz mit einem Ölgehalt von 70 bis 80 Gew.-%, dessen Öle Gemische aus trocknenden, halbtrocknenden und nichttrocknenden Ölen sind, dessen Carbonsäuren aus Gemischen von i- und o-Phthalsäure und geringen Anteilen α, β-ungesättigter Dicarbonsäuren bestehen und die als Polyalkohole Gemische aus Glycerin und Pentaerythrit enthalten,

d) einem Kohlenwasserstoffharz mit einem mittleren Molekulargewicht von 600 bis 1700 und

e) 25 bis 50 Gewichtsprozent an aromatenfreiem Mineralöl, wobei das Verhältnis von c) zu d) von 1:1 bis 1:1,5 variiert.

Von besonderem Interesse sind erfindungsgemäße Pigmentpräparationen, in denen das aromatenfreie Mineralöl einen Siedebereich von 200 - 380°C hat. Bevorzugte Pigmentpräparationen enthalten 30 - 45 Gewichtsprozent aromatenfreies Mineralöl mit einem Siedebereich zwischen 200 - 320°C, insbesondere zwischen 250 - 300°C. Derartige aromatenfreien Mineralöle sind kommerziell erhältlich.

Die erfindungsgemäßen Pigmentpräparationen enthalten 2 bis 15 Gewichtsprozent, vorzugsweise 5 - 10 Gewichtsprozent, an einem öl- oder fettsäuremodifizierten Alkydharz. Die öl- oder fettsäuremodifizierten Alkydharze sind mittelölige oder langölige Alkydharze, die in bekannter Weise aus Di- oder Polycarbonsäuren, bzw. ihren Anhydriden, sowie Polyolen und trocknenden, halbtrocknenden oder nichttrocknenden Ölen bzw. gesättigten und/oder ungesättigten Fettsäuren hergestellt werden.

Geeignete Di- oder Polycarbonsäuren bzw. Anhydride zur Herstellung der öl- oder fettsäuremodifizierten Alkydharze

sind beispielsweise Orthophthalsäure, Phthalsäureanhydrid, Isophthalsäure, Terephthalsäure, Hexahydrophthalsäure, 1,2,4-Benzoltricarbonsäure, Tetrachlorphthalsäureanhydrid, Adipinsäure, Azelainsäure, 2,2,4-Trimethyladipinsäure, Sebazinsäure, Dodecandisäure, dimerisierte Fettsäuren, Maleinsäure und Fumarsäure, vorzugsweise Phthalsäure und Isophthalsäure, sowie Gemische aus zwei oder drei der genannten Verbindungen, vorzugsweise Gemische mit Phthalsäure.

Geeignete Polyole zur Herstellung der öl- oder fettsäuremodifizierten Alkydharze sind beispielsweise Glycerin, Pentaerythrit, Dipentaerythrit, Trimethylolpropan, Trimethyloläthan, Neopentylglykol, Ethylenglykol, Diethylenglykol, 1,2-Propylenglykol, 1,2- und 1,4-Butandiol, vorzugsweise Glycerin, sowie Gemische aus zwei oder mehreren der genannten Verbindungen, vorzugsweise Gemische mit Glycerin.

Geeignete Öle zur Herstellung der ölmodifizierten Alkydharze sind beispielsweise Leinöl, Ricinusöl, Kokosöl, Ricinenöl, Sonnenblumenöl, Baumwollsaatöl, Sojaöl, Erdnußöl, Tallöl, Talgöl, vorzugsweise Leinöl und Ricinusöl, sowie Gemische der genannten Öle.

Geeignete Fettsäuren zur Herstellung der fettsäuremodifizierten Alkydharze sind beispielsweise Fettsäuren und Fettsäuregemische, die durch Verseifung der vorstehend genannten Öle oder aus Fetten, insbesondere Rindertalgfett, erhältlich sind, sowie Harzsäuren, geradkettige oder verzweigte gesättigte Fettsäuren mit 7 bis 10 C-Atomen, Benzoesäure, p-tert-Butylbenzoesäure sowie Gemische der genannten Säuren.

Sowohl bei den ölmodifizierten Alkydharzen als auch bei den fettsäuremodifizierten Alkydharzen wird ein "Ölgehalt" angegeben. Der sogenannte Ölgehalt ist der auf das Alkydharz bezogene Gewichtsanteil der in Triglyceride umgerechneten modifizierenden Öle oder Fettsäuren, die bei der Herstellung des Alkydharzes verwendet werden.

Bevorzugte öl- oder fettsäuremodifizierte Alkydharze für die erfindungsgemäßen Präparationen sind langölige Alkydharze mit einem Ölgehalt von 60 - 80 Gew.-%, vorzugsweise 70 - 82 Gew.-%, insbesondere gering viskose Alkydharze, die vorwiegend auf Basis von Orthophthalsäure und/oder Isophthalsäure und trocknenden, halbtrocknenden und/oder nichttrocknenden Ölen, insbesondere Leinöl oder Ricinusöl, sowie Glycerin, Trimethylolpropan und/oder Pentaerythrit aufgebaut sind.

Die erfindungsgemäßen Pigmentpräparationen enthalten weiterhin ein langöliges Alkydharz (Komponente c) und ein Kohlenwasserstoffharz (Komponente d)) im Verhältnis 1:1 bis 1:1,5. Die Lösung eines Gemisches der genannten Harze in aromatenfreiem Mineralöl (Komponente e)) im Verhälcnis 0,25:1 bis 1:1 eignet sich zum Flushen wäßriger Preßkuchen der in den erfindungsgemäßen Präparationen enthaltenen Pigmente.

Das langölige Alkydharz der Komponente c) hat einen Ölgehalt von 70 bis 80 Gew.-%, vorzugsweise 75 bis 77 Gew.-%. Es gehört zu einer Auswahl der möglichen öl- oder fettsäuremodifizierten Alkydharze der Komponente b). Die Alkydharze der Komponenten c) und d) können auch von gleicher Zusammensetzung sein und werden in analoger und bekannter Weise hergestellt.

Das Kohlenwasserstoffharz der Komponente d) der erfindungsgemäßen Präparationen kann aus einem Kohlenwasserstoffharz oder einem Gemisch von Kohlenwasserstoffharzen bestehen, wobei das mittlere Molekulargewicht jedes Harzes zwischen 600 bis 1700 liegt. Vorzugsweise besteht das Kohlenwasserstoffharz der Komponente d) aus einer Mischung zweier Kohlenwasserstoffharze, von denen das eine ein mittleres

Molekulargewicht zwischen 600 bis 1100 und das andere ein mittleres Molekulargewicht zwischen 1400 bis 1700 besitzt.

Geeignete Alkydharze für die Komponente c) und Kohlenwasserstoffharze für die Komponente d) der erfindungsgemäßen Präparationen sind in DT-2354225 (U.S. Patent Nr. 3,950,288) beschrieben.

Die erfindungsgemäßen Pigmentpräparationen können neben den Komponenten a) bis e) gegebenenfalls Hilfsmittel als weitere Komponenten enthalten. Mögliche Hilfsmittel sind beispielsweise Konservierungsmittel, wie Fungizide, oder Amine als Flushhilfsmittel. Wie die Komponente e) dürfen die übrigen Komponenten der erfindungsgemäßen Präparationen keine aromatenhaltigen Lösemittel enthalten.

Gegenstand der Erfindung ist auch das Verfahren zur Herstellung der erfindungsgemäßen Pigmentpräparationen die im wesentlichen die obengenannten Komponenten a), b), c), d) und e) enthalten, mit Flushen der wäßrigen Preßkuchen von Pigmenten der obengenannten Formel (I), dadurch gekennzeichnet, daß die wäßrigen Pigmentpreßkuchen in Gegenwart einer 25 - 50 prozentigen, vorzugsweise 25 - 40 prozentigen, Lösung eines Flushharzes in einer Teilmenge des aromatenfreien Mineralöls der Komponente e), wobei das Flushharz im wesentlichen aus den Komponenten c) und d) im Verhältnis 1:1 bis 1:1,5 besteht, geflusht wird und anschließend der erhaltenen Flushpaste das öl- oder fettsäuremodifizierte Alkydharz der Komponente b) sowie die übrige Teilmenge des aromatenfreien Mineralöls der Komponente e) zugesetzt und das restliche Wasser entzogen wird.

Die Lösung des Flushharzes in dem aromatenfreien Mineralöl wird zweckmäßig unter Erwärmen der Komponenten c) und d) in 50 bis 75, vorzugsweise 60 bis 75 Gewichtsprozent, bezogen auf die Lösung, aromatenfreiem Mineralöl unter Erhitzen hergestellt und gegebenenfalls filtriert. Man verfährt dabei beispielsweise wie bei der Herstellung der Bindemittel A bis E aus der DT-2354225-B2 (U.S. Patent Nr. 3,950,288), jedoch mit dem Unterschied, daß anstelle des aromatenhaltigen Mineralöls aromatenfreies Mineralöl eingesetzt wird und von dem letztgenannten Lösemittel eine größere Menge als von dem erstgenannten benötigt wird.

Der Flushprozeß kann in an sich bekannter Weise mit Hilfe von Doppelmuldenknetern üblicher Bauart durchgeführt werden.

Die deutlich verminderte Löslichkeit der obengenannten Flushharze in aromatenfreien Mineralölen ist in der Regel gerade noch ausreichend, um die für den Flushprozeß benötigten Konzentrationen an Flushharz im aromatenfreien Mineralöl einzustellen. Ab Konzentrationen von etwa 25 Gewichtsprozent und weniger Flushharz in der Lösung tritt ein Flushprozeß in den üblicherweise eingesetzten Doppelmuldenknetern praktisch nicht mehr auf. Andererseits ist beim Überschreiten der Löslichkeitsgrenze des Flushharzes im aromatenfreien Mineralöl ein starker Anstieg der Viskosität festzustellen. Im Hinblick auf eine problemlose Handhabbarkeit im Betrieb sind deshalb Konzentrationen über 50 Gewichtsprozent Flushharz im aromatenfreien Mineralöl meistens nicht praktikabel.

Die optimale Menge an Flushharz und aromatenfreiem Mineralöl für den Flushprozeß wird von Art und Konzentration des Flushharzes sowie vom Pigment mitbestimmt und muß von Fall zu Fall ermittelt werden. In der Regel liegt das Gewichtsverhältnis von Flushharz und aromatenfreiem Mineralöl zu Pigment in der Flushpaste zwischen 0,7 und 1,3.

Die im Vergleich zu Bindemitteln mit aromatenhaltigen Mineralölen etwas geringere Flushneigung der erfindungsgemäß verwendeten Lösungen von Flushharzen in aromatenfreien Mineralölen kann durch Zugabe von Flushhilfsmitteln verbessert werden. Geeignete Flushhilfsmittel sind beispielsweise primäre, sekundäre, tertiäre und quarternäre Amine oder deren Salze, wie sie entsprechend bei bekannten Flush-Prozessen eingesetzt werden. Einige mögliche Amine sind in U.S. Patenten Nr. 2,271,323; Nr. 2,271,324 und 2,282,527 beschrieben.

Nach dem Flush-Prozeß ist die Hauptmenge des Wassers, die in dem wäßrigen Pigmentpreßkuchen enthalten war, abgeschieden. Zur Herstellung der fertigen Pigmentpräparationen wird das öl- oder fettsäuremodifizierte Alkydharz der Komponente b) sowie weiteres aromatenfreies Mineralöl möglichst ohne längere Verweilzeit nach dem Flush-Prozeß, in die Flushpaste eingearbeitet und der Paste das restliche Wasser entzogen. Die Entfernung des restlichen Wassers kann in üblicher Weise durch Anlegen von Vakuum erfolgen. Vorzugsweise wird das Alkydharz der Komponente b) vor dem Trocknen im Vakuum in die Flushpaste eingearbeitet und der Paste anschließend beim Trocknen im Vakuum weiteres aromatenfreies Mineralöl zugemischt.

Die Pigmentpräparationen werden mit soviel aromatenfreiem Mineralöl versetzt, daß dabei die erfindungsgemäße Zusammensetzung mit 35 - 50 Gewichtsprozent Pigmentgehalt eingestellt wird. Je nach Anwendungszweck kann die Zügigkeit der Pigmentpräparationen durch Wahl der Mengen an Komponente b) und aromatenfreiem Mineralöl variiert werden.

Gegenstand der Erfindung ist auch die Verwendung der erfindungsgemäßen Pigmentpräparationen zur Herstellung von Druckfarben. Die erfindungsgemäßen Pigmentpräparationen zeichnen sich durch hervorragende Eigenschaften aus, die sie insbesondere für die Herstellung von Buch- und Offset-Druckfarben geeignet erscheinen lassen. So haben die Pigmentpräparationen in der Regel eine Zügigkeit zwischen 8 - 20, vorzugsweise 10 - 16 Inkometerwerten, gemessen am Tackometer "Inkomat" der Firma Prüfbau (München), wie sie

für in Buch- und Offsetdruckfarben einzusetzende Pigmentpräparate gefordert werden. Als Maß der Zügigkeit wird dabei das Drehmoment angegeben, das von einer mit der Präparation versehenen Walze auf eine nicht angetriebene, anliegende Walze aufgrund der Zügigkeit der Präparation übertragen wird ( 1 Inkometerwert = 60 cm·pond, der Inkometerwert ist ein gerätebezogener Wert).

Die erfindungsgemäßen Pigmentpräparationen sind gut lagerfähig. Auch nach längerer Lagerung bei 50 - 60°C bleiben die Pigmentpräparationen viskositätsstabil im Bereich von 30 - 70 Pa·sec.

Weiterhin zeigen die Pigmentpräparationen nur einen geringen Anstieg der Thixotropie. Die Thixotropie wird dabei zuerst an einer frisch hergestellten Präparation und dann an einer 3 Tage bei 60°C im Wärmeschrank gelagerten Probe bestimmt. Als Maß für die Thixotropie gilt dabei die Kraft, die aufgebracht werden muß, um eine Kugel mit 6 mm Durchmesser mit einer Eintauchgeschwindigkeit von 15 mm pro Minute in der Pigmentpräparation zu bewegen. Bei der beschriebenen Lagerung der erfindungsgemäßen Pigmentpräparationen steigt die Thixotropie nur in dem Rahmen an, wie sie bei Flushpasten mit aromatenhaltigen Mineralölen üblich ist.

Durch den Einsatz der erfindungsgemäßen Komponente b) in den Pigmentpräparationen lassen sich lager- und viskositätsstabile Präparationen herstellen, die einen um 10 bis 20% höheren Pigmentgehalt aufweisen, als es für erfindungsgemäß eingesetzte Arylpararosanilinsulfonsäurepigmente der Korngröße von etwa 70 - 100 $m^2/g$ bisher erreichbar war.

Die erfindungsgemäßen Pigmentpräparationen zeichnen sich durch sehr breite Verträglichkeit mit den für die verschiedenen Druckverfahren, wie Hochdruck-, Flachdruck-,

Tiefdruck-, Siebdruck- oder Mehrfarbendruck, in Frage kommenden, gebräuchlichen Bindemittel- bzw. Druckfarbensysteme aus. Sie lassen sich leicht in Bindemittelsysteme, beispielsweise in solche für Buchdruck- oder Offsetdruckfarben, Heatset-Offsetdruckfarben, Zeitungsrotationsfarben, Illustrationstiefdruckfarben und Verpackungstiefdruckfarben einarbeiten. Die mit den erfindungsgemäßen Präparationen pigmentierten Druckfarben sind einwandfrei zu verdrucken und liefern farbstarke, glänzende Drucke. Die erfindungsgemäßen Pigmentpräparationen eignen sich besonders in Mischungen mit Schwarzpasten als Druckfarbe und für Durchschreibepapiere und Farbbänder. Die Mischungen mit Schwarzpasten weisen beim Druck einen guten Glanz und Schönungseffekt auf.

In den folgenden Beispielen beziehen sich Teile- und Prozentangaben auf das Gewicht, sofern nichts anderes angegeben ist. Für die Struktur der eingesetzten Pigmente ist in den Beispielen vereinzelt eine "idealisierte Formel" angegeben. In diesen Fällen enthält das eingesetzte Pigment ein Gemisch aus Triarylpararosanilinmonosulfonsäuren, die im Unterschied zueinander die Sulfogruppe an einem der strukturell anderen endständigen Arylreste gebunden haben und die gemeinsam bei der Sulfonierung des entsprechenden Triarylpararosanilins entstehen.

Beispiel 1

240 Teile des Pigments der Triphenylpararosanilinmonosulfonsäure der idealisierten Formel

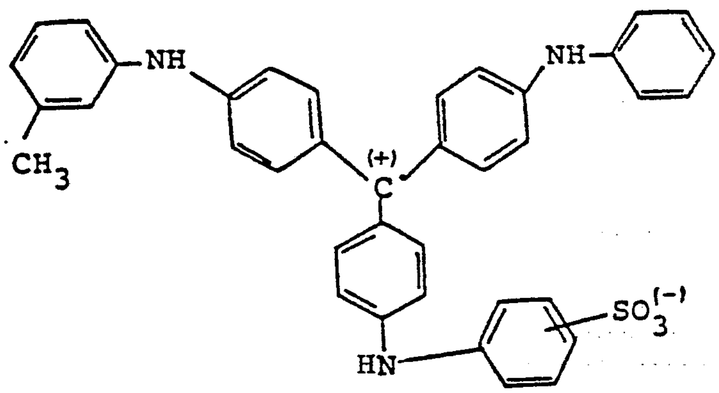

werden als wäßriger Preßkuchen (937 Teile) mit 25,6 Gew.-% Pigmentgehalt in einem Kneter mit sigmaförmigen Knetenschaufeln mit 195 Teilen einer 30 %igen Flushharzlösung geflusht, wobei die Flushharzlösung analog dem Bindemittel A aus der DT-2354225-B2 (U.S. Patent Nr. 3,950,288), jedoch mit dem Unterschied, daß 1635 Teile aromatenfreies Mineralöl des Siedebereichs 260 - 290°C an Stelle von 310 Teilen aromatenhaltigem Mineralöl eingesetzt werden, hergestellt wird. Man geht so vor, daß man zuerst 547 Teile des feuchten Preßkuchens mit 146 Teilen der 30 %igen Flushharzlösung verknetet und nach ca. 20 min eine Wassermenge von 295 Teilen durch Kippen des Kneters abtrennt. Nach Zugabe von 195 Teilen des feuchten Preßkuchens und langsames Eintropfen von 25 Teilen der Flushharzlösung werden im zweiten Flush-Vorgang 120 Teile Wasser abgeschieden. Nach dem Abtrennen des Wassers wird unter Zugabe der restlichen 195 Teile des Preßkuchens sowie unter Zutropfen von 24 Teilen Flushharzlösung ein dritter Flush-Vorgang durchgeführt. Insgesamt werden auf diese Weise 81% des mit dem Preßkuchen eingesetzten Wassers abgetrennt.

Bevor man die Restwassermenge im Vakuum abzieht, wird die nunmehr sehr zähe Knetmasse mit 30 Teilen eines ölmodifizierten Alkydharzes mit 81% Ölgehalt, das durch Umsetzung von o-Phthalsäure mit Pentaerythrit und Leinöl hergestellt wurde und eine Säurezahl unter 10 sowie eine Viskosität von 1800 - 2300 mPa·s/20°C besitzt, verknetet. Weiterhin

wird während des Trocknens im Vakuum je nach Maßgabe der Knetkonsistenz aromatenfreies Mineralöl des Siedebereichs 260 - 290°C bis zu der Menge von 118 Teilen zugesetzt. Es resultiert eine blaue pastenförmige Pigmentpräparation mit einer Viskosität von 18 Pa•s und einem Pigmentgehalt von 41,2%.
Die Pigmentpräparation hat eine Zügigkeit von 12,3 - 12,8 Inkometerwerten und ist damit hervorragend zum Einsatz in Druckfarben für Buchdruck- oder Offsetdruck-Verfahren geeignet.

Bei dreitägiger Lagerung bei 60°C steigt die Thixotropie der Pigmentpräparation nur in dem Rahmen an, wie es bei Flushpasten mit aromatenhaltigen Mineralölen üblich ist.

Die Pigmentpräparation kann durch einfaches Einarbeiten mit einem Dissolver oder auf einem Dreiwalzenstuhl mit anderen Druckfarben gemischt werden. Beispielsweise erhält man durch Mischen von 1 Teil der erfindungsgemäßen Pigmentpräparation mit 4 Teilen einer Schwarzpaste aus 20% Ruß, 75% Firnis und 5% Wachspaste (30% Polyethylenwachs in aromatenfreiem Mineralöl) unter Zusatz von 1% Firnistrockenstoff eine Druckfarbe, die beim Druck einen guten Glanz und Schönungseffekt aufweist.

Beispiel 2 (Vergleichsbeispiel):

Man verfährt wie im Beispiel 1 beschrieben, doch mit dem Unterschied, daß die 30 Teile des ölmodifizierten Alkydharzes nach dem Flushen nicht zugesetzt und nur soviel aromatenfreies Mineralöl eingesetzt wird, daß die Pigmentpräparation eine vergleichbare Viskosität von 20 Pa•s hat.
Die erhaltene Pigmentpräparation ist äußerst thixotrop und besitzt eine sehr hohe Zügigkeit, die über den Meßbereich des Inkometers der Firma Prüfbau/München hinausgeht und die sie für den Einsatz in Buch- und Offsetdruckverfahren

unbrauchbar macht. Eine bei 60°C drei Tage lang gelagerte Probe der Pigmentpräparation wird hart und ist in dieser Form nicht mehr aus den Gebinden zu entnehmen und nicht verarbeitbar.

Beispiel 3 (Vergleichsbeispiel):

Das Verfahren nach Beispiel 1 wird mit dem Unterschied wiederholt, daß statt des ölmodifizierten Alkydharzes 30 Teile des Flushharzes (= 100 Teile Flushharzlösung in aromatfreiem Mineralöl), das dem für den Flushvorgang eingesetzten entspricht, verwendet und der Pigmentgehalt der erhaltenen Paste mit weiterem aromatenfreien Mineralöl auf 41% eingestellt wird.
Die erhaltene Paste ist äußerst thioxotrop und hat eine hohe Zügigkeit, die sie für den Einsatz in Druckfarben bei Buch- und Offsetdruckverfahren unbrauchbar macht.

Beispiel 4

240 Teile eines Triphenylpararosanilinmonosulfonsäure-Pigments der Formel

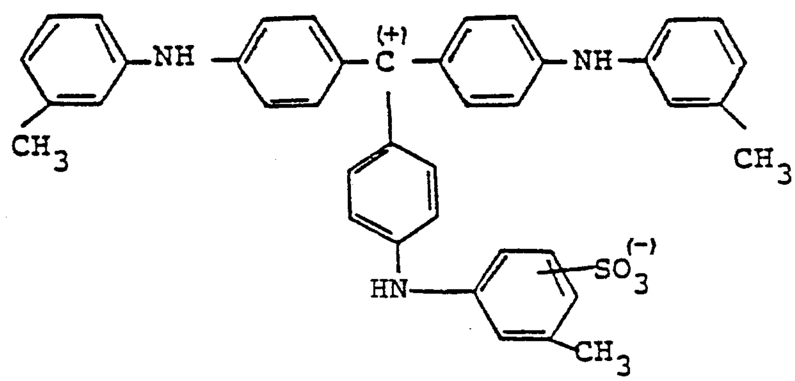

werden als wäßriger Preßkuchen (879 Teile) mit 27,3% Pigmentgehalt wie unter Beispiel 1 beschrieben geflusht. Es werden 78% des mit dem Preßkuchen eingesetzten Wassers abgeschieden und dekantiert. Vor der Trocknung des Knetansatzes im Vakuum werden 50 Teile des in Beispiel 1 beschriebenen ölmodifizierten Alkydharzes mit 81% Ölgehalt zugemischt. Nach Trocknen und Einstellen der Viskosität von 31 Pa•s mit aromatenfreiem Mineralöl des Siedebereichs 260 - 290°C wird eine äußerst farbstarke pastenförmige Pigmentpräparation mit einem Pigmentgehalt von 45,3% erhalten. Die Präparation ist um 18% farbstärker als eine auf gleiche Art, jedoch ohne Verwendung des ölmodifizierten Alkydharzes hergestellte Paste vergleichbarer Viskosität. Die Flushpaste ist gut warmlager- und thixotropiebeständig.

Beispiel 5

Man verfährt wie in Beispiel 1 beschrieben, setzt aber vor der Vakuumtrocknung der geflushten Knetermasse 50 Teile eines ölmodifizierten Alkydharzes mit einem Ölgehalt von 70 % zu, welches durch Umsetzung von Isophthalsäure mit Pentaerythrit und Ricinenöl hergestellt wird und eine Säurezahl unter 10 und eine Viskosität in 50 prozentiger Lösung in Testbenzin von 250 - 350 mPa•s besitzt. Man erhält nach Einstellung auf gleiche Farbstärke eine in Viskosität und Pigmentgehalt vergleichbare Paste wie in Beispiel 1. Die Zügigkeit der Paste beträgt 12,9 - 13,6 Inkometerwerte. Die Thixotropie der Paste steigt bei Lagerung nur in dem Rahmen an, wie er bei Flushpasten mit aromatenhaltigen Mineralölen üblich ist.

12 Teile der nach dem obigen Verfahren hergestellen Pigmentpräparation werden auf dem Dreiwalzenstuhl in eine Paste aus 14 Teilen Ruß, 18 Teilen C.I. Solvent Blue 66 und 56 Teilen nichttrocknender Öle eingearbeitet und die erhaltene Paste zur Einfärbung eines Farbbandes verwendet. Die Drucke mit Hilfe des Farbbandes zeigen einen sehr guten Schönungseffekt.

Beispiel 6

240 Teile des Pigments der idealisierten Formel

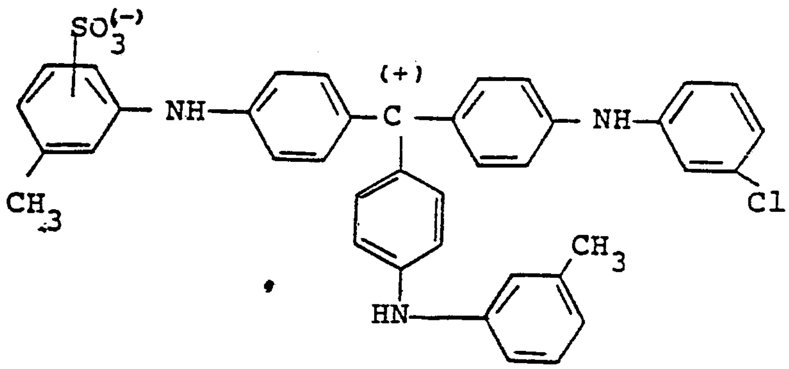

werden als wäßriger Preßkuchen (980 Teile) mit 24,5% Pigmentgehalt analog Beispiel 1 mit 195 Teilen der entsprechenden Flushharzlösung in drei Stufen geflusht. Insgesamt werden dabei 87% des mit dem Preßkuchen eingesetzten Wassers abgetrennt. Die nach den Flushvorgängen erhaltene zähe Knetmasse wird mit 70 Teilen des ölmodifizierten Alkydharzes, das in Beispiel 1 beschrieben ist, versetzt und verknetet. Bei dem anschließenden Trocknen durch Vakuum wird portionsweise je nach Maßgabe der Knetkonsistenz aromatenfreies Mineralöl des Siedebereichs von 280 - 310°C in einer Menge von 55 Teilen zugemischt.

Die erhaltene violette Pigmentpräparation hat eine Viskosität von 36 Pa•s und einen Pigmentgehalt von 42,8%. Die Pigmentpräparation ist gut warmlager- und thixotropiebeständig und weist eine Zügigkeit von 12,3 - 12,9 Inkometerwerten auf.

Beispiel 7

Man verfährt wie in Beispiel 1 beschrieben, setzt aber nach dem Flushen 80 Teile, anstelle von 30 Teilen, des ölmodifizierten Alkydharzes (81% Ölgehalt) und während des Vakuumtrocknens 53 Teile, anstelle von 118 Teilen,

aromatenfreies Mineralöl des Siedebereichs von 260 - 290°C zu. Man erhält eine gut warmlager- und thixotropiebeständige Pigmentpräparation mit 42,3% Pigmentgehalt, einer Viskosität von 52 Pa·s und einer Zügigkeit von 15,6 - 16,3 Inkometerwerten.
Die Pigmentpräparation ist hervorragend zur Herstellung von Druckfarben für den Buch- oder Offsetdruck geeignet. Sie kann durch einfaches Einrühren in eine Schwarzpaste analog Beispiel 1 zu einer Druckfarbe gemischt werden, die in Glanz und Schönungseffekt hervorragende Ergebnisse liefert.

Patentansprüche

1. Pastenförmige Pigmentpräparation, bestehend im wesentlichen aus

a) 35 - 50 Gewichtsprozent an einem Pigment oder mehreren der allgemeinen Formel I

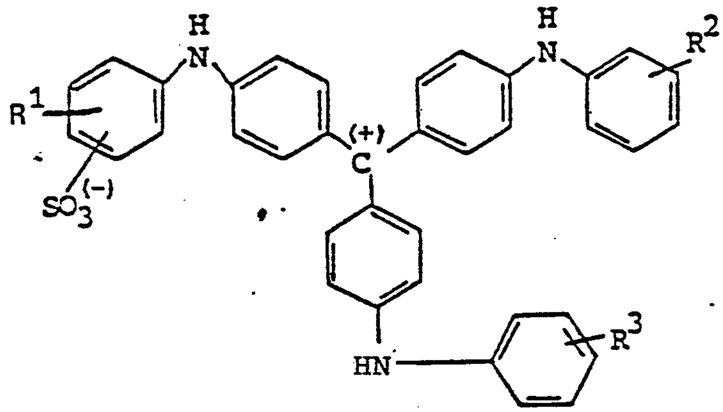

(I)

in welcher $R^1$, $R^2$ und $R^3$ unabhängig voneinander jeweils einen der Reste Wasserstoff, Halogen, wie Chlor oder Brom, $C_1$-$C_3$-Alkyl, $C_1$-$C_3$-Alkoxy oder Nitro bedeuten,

b) 2 - 15 Gewichtsprozent an einem öl- oder fettsäuremodifizierten Alkydharz,

c) einem langöligen Alkydharz mit einem Ölgehalt von 70 bis 80 Gew.-%, dessen Öle Gemische aus trocknenden, halbtrocknenden und nichttrocknenden Ölen sind, dessen Carbonsäuren aus Gemischen von i- und o-Phthalsäure und geringen Anteilen α, ß-ungesättigter Dicarbonsäuren bestehen und die als Polyalkohole Gemische aus Glycerin und Pentaerythrit enthalten,

d) einem Kohlenwasserstoffharz mit einem mittleren Molekulargewicht von 600 bis 1700 und

e) 25 bis 50 Gewichtsprozent an aromatenfreiem Mineralöl, wobei das Gewichtsverhältnis von c) zu d) von 1:1 bis 1:1,5 variiert.

2. Pastenförmige Pigmentpräparation nach Anspruch 1, dadurch gekennzeichnet, daß das aromatenfreie Mineralöl einen Siedebereich zwischen 200 - 380°C hat.

3. Pastenförmige Pigmentpräparation nach Anspruch 1 oder 2, dadurch gekennzeichnet, daß die Präparation 30 - 45 Gewichtsprozent aromatenfreies Mineralöl mit einem Siedebereich zwischen 200 und 320°C enthält.

4. Pastenförmige Pigmentpräparation nach einem oder mehreren der Ansprüche 1 bis 3, dadurch gekennzeichnet, daß das öl- oder fettsäuremodifizierte Alkydharz ein langöliges Alkydharz mit einem Ölgehalt von 60 - 85 Gew.-% ist, das vorwiegend auf Basis von Orthophthalsäure und/oder Isophthalsäure und von trocknenden, halbtrocknenden oder nichttrocknenden Ölen oder einem Gemisch daraus sowie von Glycerin, Trimethylolpropan und/oder Pentaerythrit aufgebaut ist.

5. Pastenförmige Pigmentpräparation nach einem oder mehreren der Ansprüche 1 bis 4, dadurch gekennzeichnet, daß die Präparation eine zum Einsatz in Druckfarben für den Buch- und Offsetdruck geeignete Zügigkeit zwischen 8 - 20 Inkometerwerten aufweist.

6. Verfahren zur Herstellung der in Anspruch 1 definierten Pigmentpräparation, die im wesentlichen die Komponenten a), b), c), d) und e) enthält, mit Flushen des wäßrigen Preßkuchens des Pigments der allgemeinen Formel I aus Anspruch 1, dadurch gekennzeichnet, daß der wäßrige Preßkuchen in Gegenwart einer 25 - 50 prozentigen Lösung eines Flushharzes in einer Teilmenge des aromatenfreien Mineralöls der Komponente e), wobei das Flushharz im wesentlichen aus den Komponenten c) und d) im Verhältnis 1:1 bis 1:1,5 besteht, geflusht wird und anschließend der erhaltenen Flushpaste das öl- oder fettsäuremodifizierte Alkydharz der Komponente b) sowie die übrige Teilmenge des aromatenfreien Mineralöls der Komponente e) zugesetzt wird und das restliche Wasser entzogen wird.

7. Verfahren nach Anspruch 6, dadurch gekennzeichnet, daß das öl- oder fettsäuremodifizierte Alkydharz (Komponente b))vor dem Entfernen des restlichen Wassers in die Flushpaste eingearbeitet wird und die übrige Teilmenge des aromatenfreien Mineralöls der Komponente e) beim Entfernen des restlichen Wassers aus der Flushpaste mittels Vakuum in die Flushpaste eingearbeitet wird.

8. Verwendung der Pigmentpräparation aus einem oder mehreren der Ansprüche 1 bis 5 zur Pigmentierung von Druckfarben.

9. Verwendung nach Anspruch 8, dadurch gekennzeichnet, daß die Druckfarbe eine Buchdruckfarbe ist.

10. Verwendung nach Anspruch 8, dadurch gekennzeichnet, daß die Druckfarbe eine Offsetdruckfarbe ist.

11. Verwendung nach Anspruch 8, dadurch gekennzeichnet, daß die Druckfarbe eine für Durchschreibepapiere oder Farbbänder ist.